# EUROPÄISCHE PATENTANMELDUNG

(11) **EP 3 667 359 A1**
(43) Veröffentlichungstag der Anmeldung: **17.06.2020**
(21) Anmeldenummer: 19209214.6
(22) Anmeldetag: 14.11.2019
(51) Int. Cl.: G01S 7/40, G01S 7/497, G01S 7/52, G01S 13/86, G01S 13/931, G01S 15/86, G01S 15/931, G01S 17/931, G01S 17/86

(54) **VERFAHREN ZUR ERMITTLUNG EINER VORLIEGENDEN DEJUSTAGE WENIGSTENS EINES SENSORS INNERHALB EINES SENSORVERBUNDES**

(30) Priorität: 11.12.2018 DE 102018221427
(71) Anmelder: Volkswagen AG, 38440 Wolfsburg (DE)
(72) Erfinder: Günzel, Thorben, 38118 Braunschweig (DE); Seeland, Jana, 38448 Wolfsburg (DE); Hüger, Philipp, 38471 Rühen (DE)

(57) **Zusammenfassung**

Die Erfindung betrifft ein Verfahren zur Ermittlung einer vorliegenden Dejustage wenigstens eines Sensors innerhalb eines Sensorverbundes mit zwei oder mehr Sensoren, welcher Objekte im Umfeld eines Kraftfahrzeugs erfasst, wobei wenigstens zwei der Sensoren in ihrem physikalischen Messprinzip voneinander abweichen und die Messsignale der Sensoren miteinander verglichen werden. Erfindungsgemäß wird vorgeschlagen, dass das Verfahren folgende Verfahrensschritte aufweist:
• Sammeln der von den Sensoren erfassten Objekte in einer das Umfeld des Kraftfahrzeugs repräsentierenden Umfeldkarte
• Identifizieren von Objekten aus mindestens einer Teilmenge der Objekte in der Umfeldkarte, die innerhalb eines bestimmten Erfassungszeitraums von einem Sensor aus dem Sensorverbund , aber nicht von einem anderen Sensoren aus dem Sensorverbund erfasst wurde
• Prüfen, ob eine Erfassung vom Objekt durch den anderen Sensor auf Basis von erfassungsrelevanten Eigenschaften vom Objekt möglich gewesen ist.
Bei Bejahung erfolgt ein Prüfen, ob sich das nicht erfasste Objekt zum Messzeitpunkt im Erfassungsbereich des anderen Sensors befand, wobei bei Bejahung eine Dejustage des anderen Sensors festgestellt wird.

## Beschreibung

Die Erfindung betrifft ein Verfahren zur Ermittlung einer vorliegenden Dejustage wenigstens eines Sensors innerhalb eines Sensorverbundes mit den Merkmalen vom Oberbegriff des Patentanspruchs 1. Die Erfindung betrifft auch ein Kraftfahrzeug zur Durchführung des Verfahrens.

Nahezu jedes Kraftfahrzeug verwendet heutzutage Sensoren zur Erfassung des Umfeldes, um damit Fahrerassistenzsysteme mit den notwendigen Daten versorgen zu können. Je höher der Automatisierungsgrad eines Kraftfahrzeugs ist, desto mehr Sensoren verschiedener Messprinzipien finden aus Redundanzgründen Verwendung. Dabei werden mitunter in Abhängigkeit der Sensordaten auch Eingriffe in Lenkung und Bremse des Kraftfahrzeugs durchgeführt.

Beispielsweise ist heutzutage der Einsatz von Ultraschallsensoren zur Abstandsmessung auch in manuell gelenkten Kraftfahrzeugen bereits sehr weit verbreitet. Dabei sind zumeist mehrere Ultraschallsensoren sowohl in der vorderen Stoßfängerverkleidung als auch in der hinteren Stoßfängerverkleidung des Kraftfahrzeugs montiert. Ebenfalls in den vorderen seitlichen und den hinteren seitlichen Verkleidungsbereichen sind Ultraschallsensoren verbaut. Die Abstandsmessung dient in erster Linie als Einparkhilfe beim Einparken in Parklücken oder auch beim Rangieren des Kraftfahrzeugs zur Erzeugung von Kollisionswarnungen des Fahrers bei zu dicht werdenden Abständen.

Wie erwähnt finden bei teilautomatisiert oder sogar vollautomatisiert fahrenden Kraftfahrzeugen zur Umfelderfassung zumeist Sensoren unterschiedlicher Messprinzipien Verwendung, wobei sich die Sensoren auch in der Größe ihres Erfassungsbereiches, in der Größe ihres Erfassungswinkel sowie ihrer Position und Ausrichtung im Fahrzeug voneinander unterscheiden. So finden auf Ultraschallwellen basierende Ultraschallsensoren zur Erfassung von Objekten in einem Nahbereich Anwendung. Auf Radiowellen basierende Radarsensoren (Radar=Radio Detection and Ranging) können zur Erfassung von Objekten in einem Nahbereich (Nahbereichsradar) oder auch zur Erfassung von Objekten in einem Fernbereich dienen (Fernbereichsradar). Lidarsensoren (Lidar=Light Detection and Ranging) kommen ebenfalls zum Einsatz und basieren auf elektromagnetischen Wellen im infraroten Wellenlängenbereich. Des Weiteren ist noch der Einsatz von Bildsensoren (Videokameras) bekannt, mit denen eine Erfassung von Objekten sowohl im Nah- als auch im Fernbereich möglich ist.

Jede der obengenannten Sensorarten weist aufgrund des ihr zugrunde liegenden, physikalischen Messprinzips Nachteile und Vorteile auf, wobei sich die unterschiedlichen Sensorarten in vorteilhafter Weise ergänzen können. Es versteht sich von selbst, dass eine einwandfreie Funktion aller Sensoren eines Kraftfahrzeugs gewährleistet sein muss, damit davon abhängige Fahrerassistenzsysteme korrekt arbeiten und sich der Fahrer auf eine sichere Fahrt verlassen kann.

Eine mögliche Fehlerquelle von den das Umfeld eines Kraftfahrzeugs erfassenden Sensoren ist deren Dejustage. Eine solche kann durch verschiedene Ursachen ausgelöst werden, beispielsweise:
- durch Abfallen der Sensorhalterung mitsamt Sensor auf Grund unzureichender Haftung oder auf Grund von Beschädigung
- durch Herausfallen des Sensors aus der Sensorhalterung
- durch Krafteinwirkung auf einen Sensor von außen, beispielsweise durch Verformung eines Stoßfängers infolge eines Parkremplers
- auf Grund von Fertigungstoleranzen

Eine Dejustage des Sensors kann dazu führen, dass seine nutzbare Reichweite signifikant abnimmt, dass unbrauchbare Abstände (z.B. zur Fahrbahn) oder Objektpositionen ausgegeben werden oder dass Objekte im Fahrzeugumfeld falsch oder gar nicht erfasst werden.

Aus der den Oberbegriff des Anspruchs 1 bildenden DE 10 2015 005 961 A1 ist ein Verfahren zum Überwachen der Messsignale wenigstens eines Sensors aus einem Sensorverbund mit mindestens zwei Sensoren bekannt geworden. Die Sensoren weisen einen sich zumindest teilweise überlappenden Messraum auf und erfassen mit unterschiedlichen physikalischen Messprinzipien dasselbe Objekt. Es wird ein Kreuzvergleich der Messsignale der einzelnen Sensoren des Sensorverbundes vorgenommen. Die Mittelwerte der Abweichungen der Messsignale werden zueinander erfasst. Bei einer dauerhaften Abweichung der Mittelwerte von dem Wert Null wird auf eine relative Dekalibrierung eines der Sensoren geschlossen.

In der DE 10 2015 001 971 A1 werden ein Verfahren und eine Überwachungsvorrichtung zur Überwachung von Fahrerassistenzsystemen beschrieben. In Abhängigkeit von durch Sensoren erfassten Umfeldparametern werden durch die Fahrerassistenzsyteme Fahrzeugführungsbefehle für eine Längs- oder Querführung des Kraftfahrzeugs ausgegeben. Dabei wird die Plausibilität der Fahrzeugführungsbefehle durch Vergleich mit vorgegebenen, plausiblen Grenzwerten überwacht und ggf. angepasst. Ferner erfolgt eine Funktionsüberprüfung der bei der Ermittlung der Fahrzeugführungsbefehle beteiligten Fahrzeugkomponenten. Unter Umständen erfolgt eine Deaktivierung einer defekten Fahrzeugkomponente.

Die DE 10 2015 016 888 A1 beschreibt ein Fehlererkennungsverfahren für eine umgebungserfassende Sensoreinrichtung eines für einen autonomen Fahrbetrieb geeigneten Kraftfahrzeugs. Bei dem Verfahren erfolgt eine Überwachung eines vorausliegenden Streckenabschnitts durch Auswertung von ermittelten Offset-Daten der Sensoreinrichtung. Dabei wird ein positionsorientierter Ist-Fahrverlauf innerhalb des zurückgelegten Streckenabschnitts durch sequentiell ermittelte Positionsdaten bestimmt. Durch sequentiell festgelegte Positionsdaten wird ein positionsorientierter Soll-Fahrverlauf ermittelt. Durch Vergleich der Positionsdaten des Ist-Fahrverlaufs mit den Positionsdaten des Soll-Fahrverlaufs innerhalb des zurückgelegten Streckenabschnitts wird berechnet, ob im Mittel eine Abweichung vorliegt. Bei Überschreitung eines Grenzwertes erfolgt eine Fehlerausgabe. Ein Wechsel von einem manuellen hin zu einem autonomen Fahrbetrieb ist nur möglich, wenn die ermittelte Abweichung unter dem Grenzwert liegt.

Der DE 10 2015 217 771 A1 ist ein Verfahren zum Überwachen einer Sensorfunktion für ein Kraftfahrzeug entnehmbar. Dabei wird mit Hilfe einer Sensoreinrichtung ein Parameter zur Evaluierung eines Kraftfahrzeug-Umfeldes erfasst und ein Verifizierungsmindestgrad mit Hilfe einer Überwachungseinrichtung ermittelt. Auf Basis des ermittelten Verifizierungsmindestgrades wird der erfasste Parameter evaluiert und darauf basierend wiederum die Sensorfunktion der Sensoreinrichtung überprüft.

Schließlich beschreibt die DE 10 2017 005 671 A1 noch ein Verfahren zur Bestimmung von Fehldetektionen eines Sensorsystems eines Kraftfahrzeugs. Es erfolgt dabei zunächst eine Beobachtung eines von dem Kraftfahrzeug unterschiedlichen Verkehrsteilnehmers in der Umgebung des Kraftfahrzeugs. Anschließend wird ein von dem Verkehrsteilnehmer befahrener Bereich der Umgebung ausgewählt. Wenn nun von dem fahrzeugeigenen Sensorsystem ein Objekt in dem vom Verkehrsteilnehmer kurz zuvor befahrenen Bereich erfasst wird, so wird bestimmt, dass es sich nur um eine Fehldetektion handeln kann.

Der Erfindung liegt die Aufgabe zu Grunde, ein Verfahren gemäß den Merkmalen vom Oberbegriff des Patentanspruchs 1 bereit zu stellen, welches eine zuverlässige Ermittlung der Dejustage eines solchen Sensors erlaubt, mit dem Objekte im Umfeld des Kraftfahrzeugs erfasst werden sollen. Eine weitere Aufgabe liegt darin, ein geeignetes Kraftfahrzeug zur Durchführung des Verfahrens vorzuschlagen.

Diese Aufgaben werden durch ein Verfahren zur Ermittlung einer vorliegenden Dejustage mit den Merkmalen von Anspruch 1 und durch ein Kraftfahrzeug mit den Merkmalen von Anspruch 11 gelöst. Vorteilhafte Ausführungen beziehungsweise Weiterbildungen der Erfindung sind den abhängigen Ansprüchen zu entnehmen.

Die Erfindung geht aus von einem Verfahren zur Ermittlung einer vorliegenden Dejustage wenigstens eines Sensors innerhalb eines Sensorverbundes mit zwei oder mehr Sensoren. Der Sensor erfasst Objekte im Umfeld eines Kraftfahrzeugs, wobei wenigstens zwei der Sensoren in ihrem physikalischen Messprinzip voneinander abweichen. Die wenigstens zwei Sensoren müssen jedoch nicht zwingend einen überlappenden Erfassungsbereich aufweisen. Die Messsignale der Sensoren werden miteinander verglichen. Ein Sensorverbund kann dabei sämtliche oder nur eine Teilmenge der am Fahrzeug verbauten Sensoren umfassen. Beispielsweise ist denkbar, aus den an der Fahrzeugfront, am Fahrzeugheck und an den Fahrzeugseiten befindlichen Sensoren jeweils logisch einen Sensorverbund zu bilden. Es ist auch denkbar, alle Sensoren einem Sensorverbund logisch zuzuordnen.

Erfindungsgemäß wird ein Verfahren vorgeschlagen, dass folgende Verfahrensschritte umfasst:
- Sammeln der von den Sensoren erfassten Objekte in einer das Umfeld des Kraftfahrzeugs repräsentierenden Umfeldkarte. Mit anderen Worten wird jedes von den Sensoren erfasste Objekt zu einer ein Umfeld des Kraftfahrzeugs repräsentierenden Umfeldkarte hinzugefügt. Der Begriff "Umfeldkarte" ist dabei so zu verstehen, dass es sich um einen abgelegten Datenpool der Daten aller erfassten Objekte relativ zum Fahrzeug handelt, der somit das Umfeld des Kraftfahrzeugs abbildet. Zu jedem Objekt sind dabei erfassungsrelevante Eigenschaften erfasst und in der Umfeldkarte abgespeichert.
- Identifizieren von Objekten aus mindesten einer Teilmenge der Objekte in der Umfeldkarte, die innerhalb eines Erfassungszeitraums von einem Sensor aus dem Sensorverbund, aber nicht von einem anderen Sensor aus dem Sensorverbund erfasst wurden. Ein Erfassungszeitraum kann dabei eine Vielzahl von Messzeitpunkten umfassen.
- Prüfen, ob eine Erfassung vom Objekt durch den anderen Sensor auf Basis von erfassungsrelevanten Eigenschaften vom Objekt möglich gewesen ist. Die erfassungsrelevanten Eigenschaften können bspw. durch Höhe, Breite, Ausrichtung, Farbe usw. eines Objektes gegeben sein. Mit anderen Worten wird geprüft, ob eventuell Informationen über bestimmte erfassungsrelevante Eigenschaften des Objektes fehlen, die vom anderen Sensor aufgrund seines Messprinzips gerade von Interesse sind. Zum Beispiel ist denkbar, dass Informationen über die Höhe des Objektes vorhanden sind, Informationen über dessen Farbe jedoch fehlen.
Bei Bejahung erfolgt ein Prüfen, ob sich das nicht erfasste Objekt zum Messzeitpunkt im Erfassungsbereich des anderen Sensors befand. Falls ja, wird eine Dejustage des anderen Sensors festgestellt.

Durch die oben geschilderte Vorgehensweise kann eine Dejustage eines Sensors sehr plausibel hergeleitet bzw. festgestellt werden. Insbesondere ermöglicht das Verfahren eine Überprüfung auf Dejustage auch bei Sensoren eines Sensorverbundes, die keinen überlappenden Erfassungs- bzw. Messbereich aufweisen. Das Verfahren kann auch nur für eine Teilmenge aller Objekte in der Umfeldkarte angewendet werden.

Nach einer ersten Weiterbildung der Erfindung wird eine Dejustage des anderen Sensors erst dann festgestellt, wenn ein Wahrscheinlichkeitswert für eine vorliegende Dejustage des anderen Sensors einen Grenzwert erreicht oder überschreitet. Hierdurch kann vermieden werden, dass eine Dejustage des anderen Sensors zu früh festgestellt wird. Hierauf wird später noch näher eingegangen.

Bei den oben beschriebenen Prüfungen werden zweckmäßigerweise Kenndaten des anderen Sensors bzw. Kenndaten der Sensoren berücksichtigt. Kenndaten können beispielsweise durch das Messprinzip, die Reichweite, den Öffnungswinkel, die Position und Ausrichtung am Fahrzeug gegeben sein.

Gemäß einer vorteilhaften Weiterbildung der Erfindung wird vorgeschlagen, dass die das Umfeld des Kraftfahrzeugs repräsentierende Umfeldkarte dadurch gebildet wird, dass für jedes erfasste Objekt seine Ortsbeziehung relativ zum Kraftfahrzeug auf einen Zeitpunkt seiner Erfassung (Messzeitpunkt) bezogen und seine erfassungsrelevanten Eigenschaften erfasst und abgespeichert werden.

Hierdurch ist ein sehr genaues Abbild des Umfeldes vom Kraftahrzeug möglich. Dies trägt dazu bei, dass besonders viele Informationen zur Beurteilung einer Dejustage eines Sensors vorliegen und damit die Beurteilung genauer werden lassen. Die erfassungsrelevanten Eigenschaften können beispielsweise und nicht abschließend durch die Höhe eines Objektes, seine Breite, Ausrichtung und auch seine Relativgeschwindigkeit (bei bewegten Objekten) zum Kraftfahrzeug gegeben sein.
Darüber hinaus wird jedem Objekt zugeordnet, durch welche Sensoren am Fahrzeug es erfasst wurde.

Bei der oben genannten Weiterbildung wird in der das Umfeld des Kraftfahrzeugs repräsentierenden Umfeldkarte auch eine Eigenbewegung des Kraftfahrzeugs berücksichtigt bzw. abgebildet. Die Eigenbewegung des Kraftfahrzeugs zwischen verschiedenen Messzeitpunkten kann beispielsweise mit Hilfe der Fahrzeugodometrie oder mittels anderer geeigneter Verfahren bestimmt werden. Zu unterschiedlichen Messzeitpunkten kann nämlich auch die Position und/oder Ausrichtung und/oder die Relativgeschwindigkeit des Kraftfahrzeugs zu erfassten Objekten voneinander abweichen. Diese Weiterbildung trägt zu einer sehr genauen und realitätsnahen Abbildung des Fahrzeugumfeldes in der Umfeldkarte bei. Die zeitabhängigen Positions- und/oder Geschwindigkeits- und/oder Ausrichtungsdaten können in der Umfeldkarte auch als erfassungsrelevante Eigenschaften der Objekte abgelegt werden.

Eine andere zweckmäßige Ausbildung des Verfahrens schlägt vor, dass eine Klassifizierung eines jeden erfassten Objektes hinsichtlich seiner erfassungsrelevanten Eigenschaften (bspw. Höhe, Breite, Ausrichtung usw.) durchgeführt wird und es erfolgt eine Prüfung, ob für das nicht erfasste Objekt alle für den anderen Sensor relevanten Informationen zur Bewertung einer möglichen Erfassbarkeit durch den anderen Sensor vorliegen. Mit anderen Worten wird geprüft, ob eventuell Informationen über bestimmte erfassungsrelevante Eigenschaften des Objektes fehlen, die vom anderen Sensor aufgrund seines Messprinzips gerade von Interesse sind. Zum Beispiel ist denkbar, dass Informationen über die Höhe des Objektes vorhanden sind, Informationen über dessen Farbe jedoch fehlen.

Gemäß einer weiteren Ausführungsform wird vorgeschlagen, dass, wenn eine Erfassung vom Objekt durch den anderen Sensor auf Basis der erfassungsrelevanten Eigenschaften vom Objekt nicht möglich gewesen ist, alle erfassungsrelevanten Eigenschaften für das Messprinzip vom anderen Sensor vorliegen und sich das nicht erfasste Objekt zum Messzeitpunkt im Erfassungsbereich des anderen Sensors befand, eine Wahrscheinlichkeit für die Dejustage des anderen Sensors erhöht wird. Es wird also als Prüfungsergebnis nicht gleich eine Dejustage bejaht oder verneint. Auf diese Weise kann nochmals vermieden werden, dass eine Dejustage unberechtigt erkannt wird.

Bei einer solchen Weiterbildung kann zweckmäßigerweise so vorgegangen werden, dass der Wahrscheinlichkeitswert für die Dejustage des anderen Sensors von dem Wert Null ausgehend über mehrere Messungen hinweg pro Messung schrittweise bis zu einem oberen Grenzwert erhöht wird. Der Wahrscheinlichkeitswert soll dann aussagen, mit welcher Wahrscheinlichkeit eine Dejustage des Sensors wirklich vorliegt. Eine solche Wahrscheinlichkeit steigt mit wiederholten Fehlmessungen. Deshalb wird bei Erreichen oder Überschreiten des oberen Grenzwertes und bei Bejahung der Prüfung, ob das nicht erfasste Objekt im Erfassungsbereich des anderen Sensors liegt und über diesen (bzw. dessen Messprinzip) hätte erfassbar sein müssen, eine Dejustage des anderen Sensors festgestellt.

Es ist jedoch darauf hinzuweisen, dass der Wahrscheinlichkeitswert für das Vorliegen einer Dejustage vorzugsweise auch schrittweise wieder abgesenkt werden kann. Dies kann beispielsweise dann durchgeführt werden, wenn sich bei einer anderen Messung des Sensors seine einwandfreie Funktion zum Messzeitpunkt bestätigt hat.

Gemäß einer weiteren Ausbildung des Erfindungsgedankens wird vorgeschlagen, dass bei einem Nichtvorliegen aller relevanten Informationen zur Bewertung einer Erfassbarkeit durch den anderen Sensor ebenfalls eine Prüfung erfolgt, ob das nicht erfasste Objekt zum Messzeitpunkt im Erfassungsbereich des anderen Sensors lag und über den anderen Sensor hätte erfassbar sein müssen. Hierzu wird bei der Ermittlung der zuvor erwähnten Wahrscheinlichkeit einer Dejustage des anderen Sensors zusätzlich eine durch die unvollständigen Informationen bedingte Erfassungsunsicherheit berücksichtigt. Dies kann beispielsweise dadurch erfolgen, indem der Wert des schrittweisen Hochsetzens deutlich geringer gewählt wird, als beim Vorliegen aller relevanten Informationen zur Bewertung einer Erfassbarkeit durch den anderen Sensor.

Wenn gemäß einer anderen Weiterbildung zusätzlich in einer Verfügbarkeitsprüfung geprüft wird, ob der andere Sensor zum Zeitpunkt, als sich das Objekt in dessen Erfassungsbereich befand, defekt (Selbstprüfung), blockiert (z.B. vereist) und/oder einer externen Störquelle ausgesetzt ist, können häufig vorkommende Gründe für eine zumindest zeitweise ausgesetzte Funktion eines Sensors abgefangen werden.

Bei Feststellung einer Dejustage des anderen Sensors wird nach einer anderen Ausbildung des Erfindungsgedankens vorgeschlagen, eine auf Signalen des anderen Sensors basierende Funktion des Kraftfahrzeugs einzuschränken oder zu deaktivieren.

Der Fahrer kann dann vorzugsweise zusätzlich durch ein optisches und/oder akustisches Warnsignal über die Funktionsbeeinträchtigung oder Funktionsdeaktivierung informiert werden. Dies kann ggf. mit der Aufforderung verbunden werden, eine Werkstatt aufzusuchen. Hierdurch kann das Vertrauen eines Fahrzeugführers in das Funktionieren des fahrzeugseitigen Überwachungssystems gestärkt werden.

Es hat sich als vorteilhaft erwiesen, wenn für das Verfahren wenigstens ein Sensorverbund verwendet wird, in dem wenigstens drei Sensoren vorhanden sind, die in ihren Messprinzip voneinander abweichen. Beispielsweise ist denkbar, dass in einem Sensorverbund wenigstens ein Ultraschall-, ein Radar- und ein Bildsensor (eine Kamera) oder wenigstens ein Ultraschall-, ein Bild- und ein Lidarsensor verwendet werden. Andere Ausprägungen sind denkbar.

Wie anfangs erwähnt, soll mit der Erfindung auch ein Kraftfahrzeug unter Schutz gestellt werden, welches zur Durchführung des erfindungsgemäßen Verfahrens geeignet ist.

Ein derartiges Kraftfahrzeug weist wenigstens einen Sensorverbund mit zwei oder mehr Sensoren auf, in dem wenigstes zwei Sensoren in ihrem Messprinzip voneinander abweichen. Ferner sind vorhanden:

Eine Eigenbewegungs-Erfassungseinrichtung, ferner eine Umfeld-Repräsentationseinrichtung, eine Objekt/Sensor-Zuordnungseinrichtung, eine Objekt-Klassifizierungseinrichtung und eine Auswerte- und Steuereinrichtung.

Die Eigenbewegungs-Erfassungseinrichtung dient zur Erfassung aller Bewegungen, die das Kraftfahrzeug zwischen Messzeitpunkten vollführt, wodurch also die Position und Ausrichtung des Kraftfahrzeugs zu den erfassten Objekten im Umfeld verändert wird. Sie kann beispielsweise auf Basis der bekannten Fahrzeugodometrie arbeiten.

In der Umfeld-Repräsentationseinrichtung sind die Daten aller durch die Sensoren im Umfeld des Kraftfahrzeugs erfassten Objekte ablegbar oder werden darin abgelegt. Die Ablage von erfassten Objektdaten erfolgt allerdings nur in einem bestimmten oder bestimmbaren Zeitfenster und/oder innerhalb eines bestimmten oder bestimmbaren Messraums um das Kraftfahrzeug herum. Ein gewähltes Zeitfenster kann beispielsweise bis zu einigen Minuten, ein gewählter Messraum bis zu einigen Metern betragen.

In der Objekt/Sensor-Zuordnungseinrichtung ist eine Beziehung eines jeden Objektes zu jedem dieses Objekt erfassenden Sensor ablegbar ist oder wird dort abgelegt.

Durch die Auswerte- und Steuereinrichtung ist jedes Objekt identifizierbar oder wird identifiziert, welches von einem Sensor, nicht jedoch von einem anderen Sensor erfasst wurde.

Mit Hilfe der Objekt-Klassifizierungseinrichtung ist jedes durch einen oder mehrere der Sensoren erfasste Objekt hinsichtlich seiner erfassungsrelevanten Eigenschaften (bspw. Höhe, Breite, etc.) klassifizierbar ist oder wird durch diese klassifiziert.

Durch die Auswerte- und Steuereinrichtung ist eine Bewertung durchführbar oder wird durchgeführt, ob ein bestimmtes Objekt im Erfassungsbereich eines bestimmten Sensors liegt und ob ein bestimmtes Objekt allein aufgrund seiner erfassungsrelevanten Eigenschaften durch einen bestimmten Sensor mit einem bestimmten Messprinzip hätte erfassbar sein müssen. Dabei ist durch die Auswerte- und Steuereinrichtung eine Dejustage eines bestimmten Sensors feststellbar. Bei festgestellter Dejustage ist wenigstens eine Einschränkung einer solchen Funktion des Kraftfahrzeugs durchführbar ist oder wird durchgeführt, welche auf Signalen des als dejustiert festgestellten Sensors basiert. Ferner ist durch die Auswerte- und Steuereinrichtung bei einer dejustagebedingten Einschränkung einer Funktion wenigstens eine optische und/oder akustische Warneinrichtung zur Ausgabe einer Warnmeldung aktivierbar oder wird aktiviert.

Das Kraftfahrzeug kann dadurch weitergebildet sein, dass der wenigstens eine Sensorverbund wenigstens drei Sensoren umfasst, die in ihren Messprinzip voneinander abweichen. Hierdurch kann der Sensorverbund hinsichtlich der Redundanz besonders effektiv arbeiten.

Gemäß einer anderen Weiterbildung kann das Kraftfahrzeug zusätzlich eine Sensorverfügbarkeits-Prüfungseinrichtung aufweisen, durch die die Verfügbarkeit eines jeden Sensors zum Zeitpunkt, als sich ein nicht erfasstes Objekt in dessen Erfassungsbereich befand, prüfbar ist oder geprüft wird. Dies trägt zu einer möglichen Weiterbildung des durchgeführten Verfahrens bei.

Schließlich kann ein Fahrer optimal informiert werden, wenn eine Warneinrichtung vorhanden ist, die durch die Auswerte- und Steuereinrichtung bei einer dejustagebedingten Einschränkung einer Funktion derart ansteuerbar ist oder angesteuert wird, dass eine optische und/oder akustische Warnmeldung ausgegeben wird.

Ein bevorzugtes Ausführungsbeispiel der Erfindung ist in den Figuren dargestellt und wird anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht oder zumindest nicht immer maßstabsgetreu. In manchen Figuren können Proportionen oder Abstände übertrieben dargestellt sein, um Merkmale eines Ausführungsbeispiels deutlicher hervorheben zu können.

Es zeigen, jeweils schematisch
- Fig. 1: ein zur Durchführung des Verfahrens hergerichtetes Kraftfahrzeug,
- Fig. 2: einen Ablaufplan des Verfahrens,
- Fig. 3: eine Umfeldkarte und
- Fig. 4: eine Objekt/Sensor-Zuordnungstabelle.

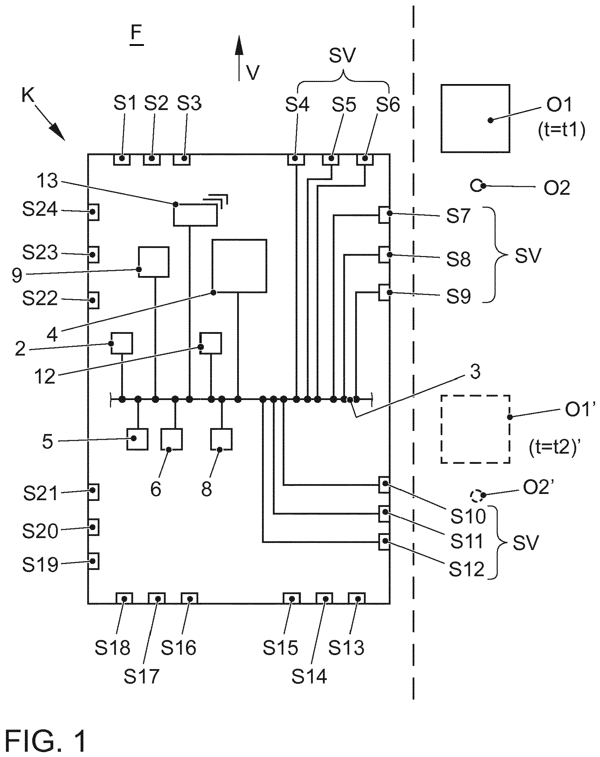

Es wird zunächst auf die Fig. 1 Bezug genommen. In dieser Figur ist ein Kraftfahrzeug K ersichtlich, welches zur Durchführung des erfindungsgemäßen Verfahrens hergerichtet und geeignet ist.

Das Kraftfahrzeug K ist mit einer Vielzahl von Sensoren S1 bis S24 ausgestattet, die zur Erfassung von Objekten im Umfeld des Kraftfahrzeugs K geeignet sind. Beispielhaft sind zwei Objekte O1 und O2 dargestellt, welche sich am rechten Rand einer Fahrbahn F, also rechtsseitig vom Kraftfahrzeug K befinden.

Jeweils drei der Sensoren S1 bis S24 sind logisch zu einem Sensorverbund SV zusammengefasst. So sind im Ausführungsbeispiel die Sensoren S1 bis S3, S4 bis S6, usw. bis hin zu den Sensoren S22 bis S24 jeweils logisch einem Sensorverbund SV zugeordnet. Wenigstens zwei der Sensoren eines jeden Sensorverbundes SV basieren auf voneinander unterschiedlichen Messprinzipien. Im Ausführungsbeispiel basieren sogar alle drei Sensoren eines Sensorverbundes SV auf voneinander unterschiedlichen Messprinzipien. So ist zum Beispiel denkbar, dass ein erster Sensor ein Ultraschallsensor, ein zweiter Sensor ein Bildsensor (Kamera) und ein dritter Sensor ein Radarsensor ist. Ein Sensorverbund kann auch einen Lidarsensor, einen Ultraschallsensor und einen Bildsensor aufweisen. Die Aufzählung ist rein beispielhaft. Ferner ist denkbar, dass die Mischung der Messprinzipien für jeden der Sensorverbunde gleich ausfällt oder auch zumindest teilweise abweichend voneinander gewählt wird. Des Weiteren können die Sensoren eines Sensorverbundes einen sich überlappenden Erfassungsbereich aufweisen. Dies ist aber keine zwingende Voraussetzung zum Funktionieren des Verfahrens. Es ist eines der wesentlichen Vorteile des Verfahrens, dass die Sensoren eines Sensorverbundes nicht zwingend einen überlappenden Erfassungsbereich aufweisen müssen.

Es ist abweichend vom Ausführungsbeispiel auch denkbar, dass sämtliche Sensoren S1 bis S24 des Kraftfahrzeugs K logisch nur einem einzigen Sensorverbund zugeordnet werden. Es ist auch die logische Bildung von anderen Sensorverbünden denkbar, beispielsweise die Bildung der Sensorverbünde "Fahrzeugheck", "Fahrzeugfront", "Fahrzeugseite rechts" und "Fahrzeugseite links".

Alle Sensoren S1 bis S24 sind an einen Datenbus 3 angeschlossen (nur für einen Teil der Sensoren dargestellt) und über diesen mit anderen Fahrzeugkomponenten signaltechnisch verbunden.

Ebenfalls mit dem Datenbus 3 verbunden sind eine Eigenbewegungs-Erfassungseinrichtung 2, eine Auswerte- und Steuereinrichtung 4, eine Umfeld-Repräsentationseinrichtung 5, eine Objekt/Sensor-Zuordnungseinrichtung 6, eine Sensorverfügbarkeits-Prüfungseinrichtung 8, eine Objekt-Klassifizierungseinrichtung 9, eine Warneinrichtung 12 zur Ausgabe von optischen und/oder akustischen Warnmeldungen und mehrere Fahrerassistenzsysteme 13, wie bspw. ein Parkassistentsystem, ein Notbremssystem, ein Spurhaltesystem, usw.

Das Kraftfahrzeug K fährt in der Darstellung mit einer Geschwindigkeit v über die Fahrbahn F. Dabei befinden sich die Objekte O1 und O2 zu einem bestimmten Zeitpunkt (t =t1) im Bereich des vorderen, rechten Kotflügels vom Kraftfahrzeug K. Zu einem späteren Zeitpunkt (t=t2) befinden sich die Objekte O1 und O2 bereits im Heckbereich des Kraftfahrzeugs K (vgl. O1', O2').Die Eigenbewegung des Kraftfahrzeug K zwischen den Zeitpunkten t1 und t2 wird durch die Eigenbewegungs-Erfassungseinrichtung 2 auf Basis der Fahrzeugodometrie oder aus anderen geeigneten Verfahren bestimmt.

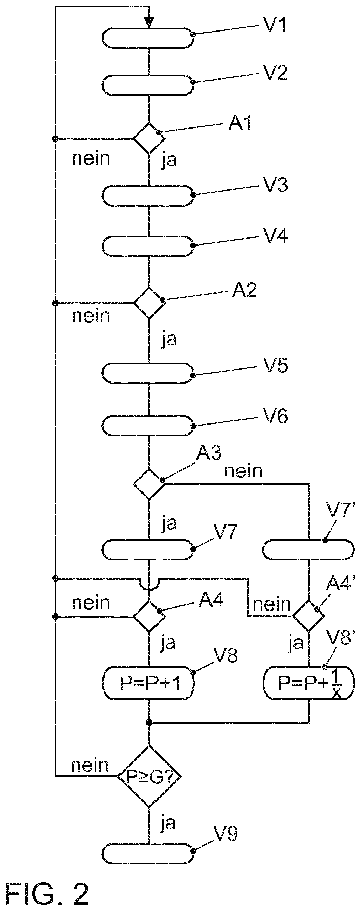

Anhand der Fig. 2 wird nun der Ablauf einer bevorzugten Ausprägung des erfindungsgemäßen Verfahrens näher erläutert.

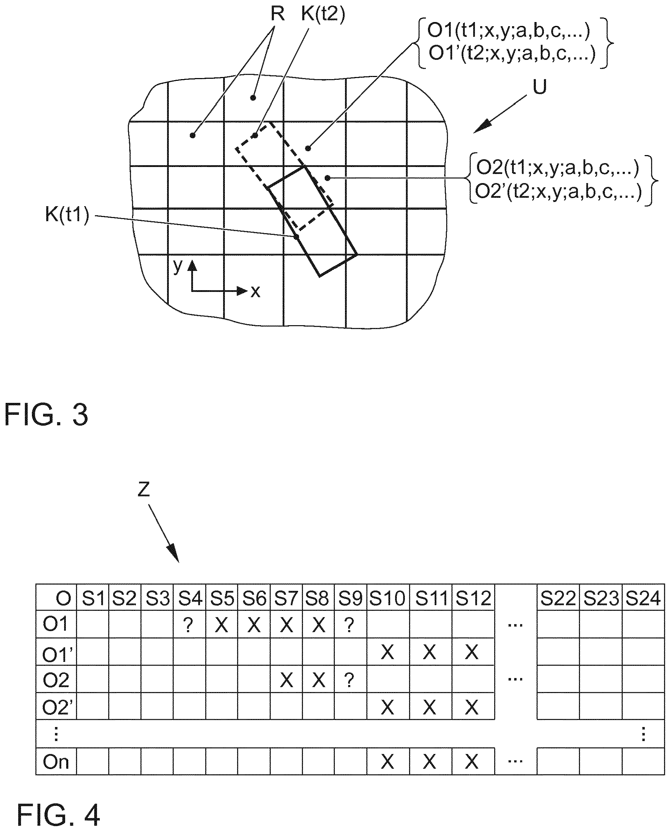

In einem Verfahrensschritt V1 werden alle durch wenigstens einen der Sensoren S1 bis S24 erfassten Objekte O (vgl. auch Fig. 4) durch die Umfeld-Repräsentationseinrichtung 5 zu einem ein Umfeld des Kraftfahrzeugs repräsentierenden Datenbestand hinzugefügt. Dieser Datenbestand soll als Umfeldkarte U (vgl. auch Fig. 3) bezeichnet werden und ist vorzugsweise in der Umfeld-Repräsentationseinrichtung 5 abgelegt.

In einem Verfahrensschritt V2 wird jedes erfasste Objekt O durch die Objekt/Sensor-Zuordnungseinrichtung 6 in eine Beziehung zu jedem solchen der Sensoren S1 bis S24 gesetzt, der das Objekt O erfasst hat. Diese Beziehungen werden in einer Objekt/Sensor-Zuordnungstabelle Z der Objekt/Sensor-Zuordnungseinrichtung 6 abgelegt (vgl. auch Fig. 4). Anhand einer Abfrage A1 wird abgefragt, ob es erfasste Objekte O in einem Sensorverbund SV gibt, welche von einem Sensor aus dem Sensorverbund SV, nicht jedoch von einem anderen Sensor aus demselben Sensorverbund SV erfasst wurden. Falls ja, werden solche Objekte O in einem Verfahrensschritt V3 identifiziert.

Da im Verfahren davon ausgegangen wird, dass im Normalfall alle Sensoren eines Sensorverbundes SV ein bestimmtes Objekt O erfassen können (beispielsweise die Sensoren S4-S6 das Objekt O1 und die Sensoren S7-S9 das Objekt O2, vgl. Fig. 1), wird vermutet, dass der andere Sensor eines Sensorverbundes SV, welcher ein Objekt nicht erfasst hat, unter Umständen dejustiert ist. Daher wird für diesen Sensor eine intensivere Ursachenforschung eingeleitet:
Dazu erfolgt in einem Verfahrensschritt V4 durch die Sensor-Verfügbarkeitsprüfungseinrichtung 8 eine Verfügbarkeitsprüfung des anderen Sensors. Mit anderen Worten erfolgt eine Prüfung, ob der andere Sensor grundsätzlich (also funktionstechnisch) überhaupt für die Erfassung eines Objektes verfügbar ist. Es kann nämlich der Fall auftreten, dass der andere Sensor mechanisch blockiert ist (bspw. durch Vereisung oder Verschmutzung). Hier kann beispielsweise eine Selbstprüfung des anderen Sensors initiiert werden. Es ist auch denkbar, dass der andere Sensor einer externen Störquelle unterliegt (bspw. elektromagnetisches Strahlungsfeld) oder dass sonstige Sensordefekte zu einem Ausfall des anderen Sensors geführt haben, was wiederum durch andere Prüfroutinen abprüfbar ist, wie beispielsweise die Überprüfung auf eine externe Störquelle hin.

Falls in einer Abfrage A2 bestätigt wurde, dass der andere Sensor verfügbar war, erfolgt durch die Objekt-Klassifizierungseinrichtung 9 in einem Verfahrensschritt V5 eine Klassifizierung des von dem anderen Sensor nicht erfassten Objektes zumindest hinsichtlich eines Teils seiner erfassungsrelevanten Eigenschaften a, b, c, usw.

Erfassungsrelevante Eigenschaften können beispielsweise durch die Höhe, Breite, Form, Oberflächenstruktur, Farbe, den Oberflächenverlauf (z.B. Kanten Rundungen), die Existenzwahrscheinlichkeit, die Ausrichtung und auch die Geschwindigkeit eines Objektes gegeben sein und sind bereits aus dem Datenpool der erwähnten Umfeldkarte U (Fig. 3) abgreifbar. Die darauf basierende Klassifizierung kann in einer Tabelle der Objekt-Klassifizierungseinrichtung 9 abgelegt sein. Beispielsweise ist denkbar, die Objekte hinsichtlich der erfassungsrelevanten Eigenschaft "Höhe" in die Klassen "kleiner als 5 cm", "gleich 5 cm aber kleiner als 20 cm" und "höher als 20 cm" einzuteilen. Hinsichtlich der erfassungsrelevanten Eigenschaft "Form" sind beispielsweise Klasseneinteilungen wie "eckig", "rund", "gewellt" denkbar. Die Eigenschaft "Oberflächenstruktur" kann beispielsweise in die Klassen "rau", "glatt" oder "inhomogen" eingeteilt werden. Bei der Eigenschaft "Farbe" sind zum Beispiel die Klassen "dunkel" oder "hell" denkbar, usw.

In einem Verfahrensschritt V6 wird daraufhin überprüft, ob für das nicht erfasste Objekt alle für den anderen Sensor relevanten Informationen zur Bewertung einer möglichen Erfassbarkeit durch den anderen Sensor vorliegen. Mit anderen Worten erfolgt hier eine Prüfung, ob Informationen über bestimmte erfassungsrelevante Eigenschaften des Objektes fehlen, die vom anderen Sensor aufgrund seines Messprinzips von Interesse für die Erfassung von Objekten sind. So kann von einem Objekt beispielsweise nur die Höhe erfasst worden sind, obwohl beispielsweise für den anderen Sensor außer der Höhe eines Objektes auch dessen Farbe für eine einwandfreie Erfassung relevant sind.

Wird in einer Abfrage A3 bejaht, dass von dem durch den anderen Sensor nicht erfassten Objekt alle für den anderen Sensor notwendigen, erfassungsrelevanten Informationen vorliegen, so wird in einem Verfahrensschritt V7 geprüft, ob das nicht erfasste Objekt zu einem bestimmten Messzeitpunkt im Erfassungsbereich des anderen Sensors war und vom anderen Sensor unter Berücksichtigung der erfassungsrelevanten und klassifizierten Eigenschaften auch hätte erfasst werden müssen.

Diese Fragestellungen können durch die Auswerte- und Steuereinrichtung 4 zum einen mit Hilfe der Umfeldkarte U (vgl. Fig. 3) und zum anderen mit Hilfe der vorgenommenen Objektklassifizierung beantwortet werden.

In der Umfeldkarte U sind auch die Positionskoordinaten x, y eines jeden erfassten Objektes relativ zum Kraftfahrzeug K bzw. relativ zu dem anderen Sensor abgelegt, wobei wie erwähnt auch die durch die Eigenbewegung des Kraftfahrzeugs verursachten Positions- und Ausrichtungsänderungen der Objekte zum Kraftfahrzeug K Berücksichtigung finden. Dies wird deutlich durch eine dargestellte Position des Kraftfahrzeugs K innerhalb der Umfeldkarte U zu einem ersten Messzeitpunkt t1, vgl. K(t1) und durch eine dargestellte Position des Kraftfahrzeugs K zu einem zweiten Messzeitpunkt t2, vgl. K(t2).

Zum anderen sind die Kenndaten eines jeden der Sensoren S1 bis S24 abgespeichert (u.a. Messprinzip, Reichweite, vertikaler und horizontaler Öffnungswinkel, Position und Ausrichtung am Fahrzeug), bspw. in der Auswerte- und Steuereinrichtung 4. Aufgrund der in der Objekt-Klassifizierungseinrichtung 9 abgelegten Klassifizierungsdaten sowie der erfassungsrelevanten Eigenschaften aus der Umfeldkarte U ist zu jedem Objekt beantwortbar, ob es -bei einer Position im Erfassungsbereich des anderen Sensors- auch hätte erfasst werden können.

Bei dieser Prüfung werden die erfassungsrelevanten und klassifizierten Eigenschaften vom Objekt auf den bestimmten Messzeitpunkt bezogen, bei dem das Objekt im Erfassungsbereich des anderen Sensors lag.

Wird in einer Abfrage A4 daraufhin festgestellt, dass das vom anderen Sensor nicht erfasste Objekt im Erfassungsbereich des anderen Sensors gelegen hat und von diesem überdies hätte erfasst werden können, wird der Wahrscheinlichkeitswert P für eine Dejustage des anderen Sensors erhöht. Die Feststellung der Dejustage erfolgt daher erst nach einer Vielzahl von Messzeitpunkten, bei denen eine nicht korrekte Messung des anderen Sensors festgestellt wurde

Der Wahrscheinlichkeitswert P wird, von Null ausgehend, in einem Verfahrensschritt V8 über mehrere Messungen, in denen die Abfrage A4 bejaht werden konnte, schrittweise erhöht. Allerdings findet auch eine schrittweise Absenkung dieses Wertes dann statt, wenn sich eine korrekte Funktion (einwandfreie Objekterfassung) des Sensors in einer anderen Messung bestätigt hat (nicht näher dargestellt).

In einer Abfrage A5 wird danach abgefragt, ob der Wahrscheinlichkeitswert P größer oder gleich einem bestimmten Grenzwert G ist. Trifft dies zu, so wird davon ausgegangen, dass der andere Sensor dejustiert ist.

Eine Dejustage des anderen Sensors wird dabei also nur dann festgestellt, wenn der Wahrscheinlichkeitswert P für eine Dejustage des anderen Sensors den Grenzwert G erreicht oder überschreitet.

Die Feststellung einer Dejustage des anderen Sensors hat zur Folge, dass in einem Verfahrensschritt V9 eine auf Signalen des anderen Sensors basierende Funktion eingeschränkt oder aktiviert wird. Ferner wird der Fahrer über die Warneinrichtung 12 durch ein optisches und/oder akustisches Signal über die Funktionsbeeinträchtigung informiert.

Wird in der Abfrage A3 allerdings verneint, dass vom durch den anderen Sensor nicht erfassten Objekt alle für den anderen Sensor erfassungsrelevanten Informationen vorliegen, so wird zu einem Verfahrensschritt V7'verzweigt, in dem ebenfalls eine Prüfung erfolgt, ob das nicht erfasste Objekt im Erfassungsbereich des anderen Sensors liegt und überdies durch den anderen Sensor hätte erfasst werden müssen.

Bei Bejahung dieser Fragestellung in einer Abfrage A4' wird zusätzlich jedoch eine durch die unvollständigen Informationen bedingte Erfassungsunsicherheit berücksichtigt, da bei einem Fehlen von erfassungsrelevanten Informationen eines Objektes bei dem anderen Sensor durchaus die Möglichkeit besteht, dass dieser trotz ordnungsgemäßer Justage das Objekt nicht ausreichend erfassen konnte.

Die Erfassungsunsicherheit wird daher in diesem Fall dadurch abgebildet, dass der bereits erwähnte Wahrscheinlichkeitswert P in einem Verfahrensschritt V8' über mehrere Messungen, in denen die Abfrage A4' bejaht werden konnte, schrittweise nur um einen kleineren Wert (Nenner N) erhöht wird, als dies im Verfahrensschritt V8 der Fall war. Allerdings findet auch hierbei wiederum eine schrittweise Absenkung des Wahrscheinlichkeitswertes P dann statt, wenn sich eine korrekte Funktion (einwandfreie Objekterfassung) des Sensors in einer anderen Messung bestätigt hat (nicht näher dargestellt).

In der Abfrage A5 wird danach wiederum abgefragt, ob der Wahrscheinlichkeitswert P größer oder gleich dem erwähnten Grenzwert G ist. Trifft dies zu, so wird davon ausgegangen, dass der andere Sensor dejustiert ist.

Anhand der Fig. 3 wird skizziert, welche Informationen in der Umfeldkarte U abgebildet sein können. Jedem erfassten Objekt O werden nun folgende Attribute zugeordnet:
- Zeitpunkt t der Erfassung. Auf diese Weise kann die Umfeldkarte U auch eine Historie des Kraftfahrzeugumfeldes abbilden
- Koordinaten x, y in Relation zum Kraftfahrzeug. Es wird dadurch also die Relativposition zum Kraftfahrzeug K erfasst.
- erfassungsrelevante und klassifizierte Objekteigenschaften a, b, c, usw. (Höhe, Breite, Ausrichtung, Farbe, etc.)

Im gezeigten Ausschnitt der Umfeldkarte U ist ersichtlich, dass diese ein aus gleichgroßen Planquadraten gebildetes Raster R aufweisen kann. Jedes Planquadrat kann beispielsweise eine Kantenlänge von 5 cm aufweisen und bildet einen eben solchen Umfeldbereich des Kraftfahrzeugs K logisch ab. Erfasste Objekte werden in diesem Raster eingeordnet. Anstatt die Umfeldkarte U rasterbasiert aufzubauen, ist beispielsweise auch ein vektorbasierter Aufbau denkbar (nicht dargestellt).

Im dargestellten Ausschnitt der Umfeldkarte U sind nun die Objekte O1 und O2 ersichtlich, die zu einem Zeitpunkt t1 erfasst wurden. Dieselben Objekte wurden kurze Zeit später (von anderen Sensoren) zu einem Zeitpunkt t2 erfasst.

Schließlich soll noch anhand der Fig. 4 eine Möglichkeit dargestellt werden, wie jedes erfasste Objekt O in eine Beziehung zu jedem derjenigen Sensoren S1 bis S24 gesetzt wird, welcher das Objekt O erfasst hat.

So sind in einer Objekt/Sensor-Zuordnungstabelle Z die erfassenden Sensoren S1 bis S24 des Kraftfahrzeugs K über erfassten Objekten O (O1 bis On) angeordnet. Es sind aus der Objekt/Sensor-Zuordnungstabelle Z beispielsweise folgende Informationen ableitbar (vgl. auch Fig. 1):
- Das Objekt O1 wurde durch die Sensoren S5, S6 eines Sensorverbundes SV, nicht jedoch vom Sensor S4 erfasst. Daher bedarf der Sensor S4 einer weiteren Prüfung gemäß dem Verfahren (vgl. Fragezeichen).
- Das Objekt O1 wurde aber auch durch die Sensoren S7 und S8 aus einem anderen Sensorverbund SV erfasst. Der dritte Sensor S9 des anderen Sensorverbundes SV erfasste das Objekt O1 hingegen nicht. Auch dies bedarf einer weiteren Prüfung.
- Das Objekt O2 wurde durch den Sensor S9 aus dem anderen Sensorverbund SV ebenfalls nicht erfasst, weshalb auch hier weiterer Prüfungsbedarf besteht.
- Ein Objekt On (im Ausschnitt der Umfeldkarte U und in Fig. 1 nicht ersichtlich) wurde von allen Sensoren S1 bis S3 eines Sensorverbundes SV erfasst. In diesem Sensorverbund scheint daher alles in Ordnung zu sein. Eine weitergehende Prüfung findet nicht statt.

Das beschriebene Verfahren bietet insgesamt eine sehr sichere Prüfung, ob ein bestimmter Sensor dejustiert ist, da Ursachen für ein Nichterfassen eines bestimmten Objektes aus verschiedensten Blickwinkeln abgeprüft werden. Somit können Fehlentscheidungen, aufgrund derer auf einem Sensor basierende Funktionen eingeschränkt oder deaktiviert wird, auf ein Minimum beschränkt werden.

### Bezugszeichenliste

- 2: Eigenbewegungs-Erfassungseinrichtung
- 3: Datenbus
- 4: Auswerte- und Steuereinrichtung
- 5: Umfeld-Repräsentationseinrichtung
- 6: Objekt/Sensor-Zuordnungseinrichtung
- 8: Sensorverfügbarkeits-Prüfungseinrichtung
- 9: Objekt-Klassifizierungseinrichtung
- 12: Warneinrichtung
- 13: Fahrerassistenzsysteme

- a, b, c: erfassungsrelevante Objekteigenschaften
- A1-A4, A40, A41: Abfragen
- F: Fahrbahn
- K: Kraftfahrzeug
- N: Nenner
- O: erfasste Objekte
- O1-On: erfasste Objekte
- O1', O2': erfasste Objekte
- R: Raster
- S1-S24: Sensoren zur Objekterfassung
- SV: Sensorverbund
- t; t1-t4: Zeitpunkte einer Erfassung
- U: Umfeldkarte
- v: Geschwindigkeit
- V1-V9, V7', V8': Verfahrensschritte
- x: x-Koordinaten
- y: y-Koordinaten
- Z: Objekt/Sensor-Zuordnungstabelle

## Patentansprüche

1. Verfahren zur Ermittlung einer vorliegenden Dejustage wenigstens eines Sensors (S1-S24) innerhalb eines Sensorverbundes (SV) mit zwei oder mehr Sensoren, welcher Objekte (O) im Umfeld eines Kraftfahrzeugs (K) erfasst, wobei wenigstens zwei der Sensoren (S1-S24) in ihrem physikalischen Messprinzip voneinander abweichen und die Messsignale der Sensoren (S1-S24) miteinander verglichen werden, **dadurch gekennzeichnet, dass** es folgende Verfahrensschritte aufweist:
- Sammeln der von den Sensoren (S1-S24) erfassten Objekte (O) in einer das Umfeld des Kraftfahrzeugs (K) repräsentierenden Umfeldkarte (U)
- Identifizieren von Objekten (O) aus mindestens einer Teilmenge der Objekte (O) in der Umfeldkarte (U), die innerhalb eines Erfassungszeitraums von einem Sensor (S1-S24) aus dem Sensorverbund (SV), aber nicht von einem anderen Sensor (S1-S24) aus dem Sensorverbund (SV) erfasst wurden
- Prüfen, ob eine Erfassung vom Objekt (O) durch den anderen Sensor (S1-S24) auf Basis von erfassungsrelevanten Eigenschaften (a, b, c, ...) vom Objekt (O) möglich gewesen ist
- Bei Bejahung erfolgt ein Prüfen, ob sich das nicht erfasste Objekt (O) zum Messzeitpunkt (t) im Erfassungsbereich des anderen Sensors (S1-S24) befand, wobei bei Bejahung eine Dejustage des anderen Sensors (S1-S24) festgestellt wird.

2. Verfahren nach Anspruch 1, **dadurch gekennzeichnet, dass** eine Dejustage des anderen Sensors festgestellt wird, wenn ein Wahrscheinlichkeitswert (P) für eine vorliegende Dejustage des anderen Sensors einen Grenzwert G erreicht oder überschreitet.

3. Verfahren nach Anspruch 1 oder 2, **dadurch gekennzeichnet, dass** bei den Prüfungen Kenndaten der Sensoren berücksichtigt werden.

4. Verfahren nach einem der vorhergehenden Ansprüche, **dadurch gekennzeichnet, dass** die das Umfeld des Kraftfahrzeugs (K) repräsentierende Umfeldkarte (U) dadurch gebildet wird, dass für jedes erfasste Objekt (O1, O2), seine Ortsbeziehung relativ zum Kraftfahrzeug (K) auf einen Zeitpunkt (t) seiner Erfassung bezogen und seine erfassungsrelevanten Eigenschaften (a, b, c, ...) erfasst und abgespeichert werden, wobei in der das Umfeld des Kraftfahrzeugs (K) repräsentierenden Umfeldkarte (U) auch eine Eigenbewegung des Kraftfahrzeugs (K) abgebildet wird.

5. Verfahren nach einem der vorhergehenden Ansprüche, **dadurch gekennzeichnet, dass** eine Prüfung erfolgt, ob für das nicht erfasste Objekt (O) alle für den anderen Sensor (S1-S24) relevanten Informationen zur Bewertung einer möglichen Erfassbarkeit durch den anderen Sensor (S1-S24) vorliegen.

6. Verfahren nach Anspruch 5, **dadurch gekennzeichnet, dass** bei einem Nichtvorliegen aller erfassungsrelevanten Eigenschaften des Objektes (O) zur Bewertung einer Erfassbarkeit durch den anderen Sensor (S1-S24) ebenfalls eine Prüfung erfolgt, ob das nicht erfasste Objekt (O) zum Messzeitpunkt im Erfassungsbereich des anderen Sensors (S1-S24) lag und über den anderen Sensor (S1-S24) hätte erfassbar sein müssen, wobei zusätzlich eine durch die unvollständigen Informationen bedingte Erfassungsunsicherheit berücksichtigt wird.

7. Verfahren nach einem der vorhergehenden Ansprüche, **dadurch gekennzeichnet, dass** eine Klassifizierung eines jeden erfassten Objektes (O1, O2) hinsichtlich seiner erfassungsrelevanten Eigenschaften (a,b,c) durchgeführt wird

8. Verfahren nach einem der vorhergehenden Ansprüche, **dadurch gekennzeichnet, dass** zusätzlich in einer Verfügbarkeitsprüfung geprüft wird, ob der andere Sensor (S1-S24) zum Zeitpunkt (t), als sich das Objekt (O) in dessen Erfassungsbereich befand, defekt, blockiert und/oder einer externen Störquelle ausgesetzt war oder andere Umwelteinflüsse eine Erfassung des Objektes (O) durch den anderen Sensor (S1-S24) behinderten.

9. Verfahren nach einem der vorhergehenden Ansprüche, **dadurch gekennzeichnet, dass** bei Feststellung einer Dejustage des anderen Sensors (S1-S24) eine auf Signalen des anderen Sensors (S1-S24) basierende Funktion des Kraftfahrzeugs (K) eingeschränkt oder deaktiviert wird.

10. Verfahren nach Anspruch 9, **dadurch gekennzeichnet, dass** der Fahrer durch ein optisches und/oder akustisches Warnsignal über die Funktionsbeeinträchtigung oder Funktionsdeaktivierung informiert wird.

11. Kraftfahrzeug (K) zur Durchführung des Verfahrens nach einem der vorhergehenden Ansprüche, mit wenigstens einem Sensorverbund (SV), in dem wenigstens zwei Sensoren (S1-S3; S4-S6; S7-S9; ... ;S22-S24) in ihrem Messprinzip voneinander abweichen, mit einer Eigenbewegungs-Erfassungseinrichtung (2), ferner mit einer Umfeld-Repräsentationseinrichtung (5), einer Objekt/Sensor-Zuordnungseinrichtung (6), einer Objekt-Klassifizierungseinrichtung (9) und einer Auswerte- und Steuereinrichtung (4), wobei in der Umfeld-Repräsentationseinrichtung (5) die Daten aller durch die Sensoren (S1-S24) im Umfeld des Kraftfahrzeugs (K) erfassten Objekte (O) ablegbar sind oder abgelegt werden, wobei in der Objekt/Sensor-Zuordnungseinrichtung (6) eine Beziehung eines jeden Objektes (O1, O2) zu jedem dieses Objekt (O1, O2) erfassenden Sensor (S1-S24) ablegbar ist oder abgelegt wird, wobei durch die Eigenbewegungs-Erfassungseinrichtung (2) die Eigenbewegung des Kraftfahrzeugs (K) innerhalb eines bestimmten Zeitraums ermittelbar ist oder ermittelt wird und wobei durch die Auswerte- und Steuereinrichtung (4) jedes Objekt (O1, O2) identifizierbar ist oder identifiziert wird, welches von einem Sensor (S1-S24), nicht jedoch von einem anderen Sensor (S1-S24) erfasst wurde, wobei durch die Objekt-Klassifizierungseinrichtung (9) jedes durch einen oder mehrere der Sensoren (S1- S24) erfasste Objekt (O1, O2) hinsichtlich seiner erfassungsrelevanten Eigenschaften (a, b, c, ...) klassifizierbar ist oder klassifiziert wird, wobei durch die Auswerte- und Steuereinrichtung (4) eine Bewertung durchführbar ist oder durchgeführt wird, ob ein bestimmtes Objekt (O1, O2) im Erfassungsbereich eines bestimmten Sensors (S1-S24) liegt und ob ein bestimmtes Objekt (O1, O2) durch einen bestimmten Sensor (S1 -S24) hätte erfassbar sein müssen, wobei durch die Auswerte- und Steuereinrichtung (4) eine Dejustage eines bestimmten Sensors (S1- S24) feststellbar ist oder festgestellt wird und wenigstens eine Einschränkung einer solchen Funktion des Kraftfahrzeugs (K) durchführbar ist oder durchgeführt wird, welche auf Signalen des als dejustiert festgestellten Sensors (S1-S24) basiert.

12. Kraftfahrzeug (K) nach Anspruch 11, **dadurch gekennzeichnet, dass** eine Sensorverfügbarkeits-Prüfungseinrichtung (8) vorhanden ist, durch die die Verfügbarkeit eines jeden Sensors (S1-S24) zum Zeitpunkt (t), als sich ein nicht erfasstes Objekt (O) in dessen Erfassungsbereich befand, prüfbar ist oder geprüft wird.

13. Kraftfahrzeug (K) nach einem der Ansprüche 11 oder 12, **dadurch gekennzeichnet, dass** eine Warneinrichtung (12) vorhanden ist, die durch die Auswerte- und Steuereinrichtung (4) bei einer dejustagebedingten Einschränkung einer Funktion derart ansteuerbar ist oder angesteuert wird, dass eine optische und/oder akustische Warnmeldung ausgegeben wird.
